(19) Europäisches Patentamt / European Patent Office / Office européen des brevets

(11) **EP 1 348 847 B1**

(12) **FASCICULE DE BREVET EUROPEEN**

(45) Date de publication et mention
de la délivrance du brevet:
**23.06.2010 Bulletin 2010/25**

(51) Int Cl.:
*F02B 23/06* (2006.01)   *F02B 1/12* (2006.01)
*F02B 31/00* (2006.01)

(21) Numéro de dépôt: **03290515.0**

(22) Date de dépôt: **04.03.2003**

(54) **Procédé d'injection de carburant pour moteur à combustion interne à forte sensibilité d'injection et moteur utilisant un tel procédé**

Verfahren zur Brennstoffeinspritzung für eine Brennkraftmaschine mit Einspritzung hoher Sensibilität und Motor der ein solches Verfahren verwendet

Method of injecting fuel for an internal combustion engine having high sensibility injection and engine using such a method

(84) Etats contractants désignés:
**DE ES GB IT**

(30) Priorité: **28.03.2002 FR 0203925**

(43) Date de publication de la demande:
**01.10.2003 Bulletin 2003/40**

(73) Titulaire: **Institut Français du Pétrole
92852 Rueil-Malmaison Cedex (FR)**

(72) Inventeurs:
• **Gatellier, Bertrand
78380 Bougival (FR)**
• **Walter, Bruno
92250 La Garenne-Colombes (FR)**

(56) Documents cités:
| | |
|---|---|
| DE-B- 1 055 873 | US-A- 4 446 830 |
| US-A- 4 473 046 | US-A- 4 858 578 |
| US-A- 5 373 820 | US-A- 5 392 745 |
| US-A- 5 875 743 | US-A- 5 906 183 |

• NABER D ET AL: "DIE NEUEN COMMON-RAIL-DIESELMOTOREN MIT DIREKTEINSPRITZUNG IN DER MODELLGEPFLEGTEN E-KLASSE; TEIL 2: VERBRENNUNG UND MOTORMANAGEMENT" MTZ MOTORTECHNISCHE ZEITSCHRIFT, FRANCKH'SCHE VERLAGSHANDLUNG, ABTEILUNG TECHNIK. STUTTGART, DE, vol. 60, no. 9, septembre 1999 (1999-09), pages 578-580,582-584,586-588, XP000870856 ISSN: 0024-8525
• PATENT ABSTRACTS OF JAPAN vol. 015, no. 374 (M-1160), 20 septembre 1991 (1991-09-20) -& JP 03 149315 A (YANMAR DIESEL ENGINE CO LTD), 25 juin 1991 (1991-06-25)

**Description**

La présente invention se rapporte à un procédé d'injection de carburant dans la chambre de combustion d'un moteur à combustion interne à injection directe, notamment de type Diesel, comportant un injecteur de carburant permettant d'obtenir ayant une forte sensibilité d'injection du moteur.

L'invention concerne également un moteur à combustion interne utilisant un tel procédé.

Généralement et comme mieux décrit dans le document US 5 906 183, un moteur à combustion interne comprend au moins un cylindre, une culasse, un piston coulissant dans ce cylindre, un injecteur de carburant et une chambre de combustion délimitée sur un côté par la face supérieure du piston comprenant un téton pointant vers la culasse et disposé dans un bol.

Comme cela est généralement admis par les spécialistes du demandeur, pour comparer les moteurs entre eux, de cylindrée unitaire et avec des systèmes d'injection différents, on a généralement recours à la formulation suivante permettant de déterminer la sensibilité d'injection (en cm$^3$/30s) du moteur :

$$\text{Sensibilité} = \text{Perméabilité} \times \frac{50}{\text{Puissance}} \times \frac{\sqrt{P\_inj - 50}}{1300} \times \frac{0,5}{L\_cyl}$$

Où *Perméabilité* représente la perméabilité de l'injecteur (en cm$^3$/30s), *Puissance,* la puissance au litre du moteur (en KW/l), *L_cyl*, la cylindrée unitaire du moteur (en litre) et *P_inj*, la pression maximale du système d'injection (en bar).

Le choix de cette sensibilité résulte d'un compromis entre les exigences de performance à pleine charge (couple et puissance) et de pollution aux charges partielles.

Ainsi, pour tenir compte des contraintes liées à la réglementation en matière de pollution et assurer une puissance suffisante, il est généralement utilisé un moteur avec une sensibilité d'une valeur inférieure à 380 cm$^3$/30s.

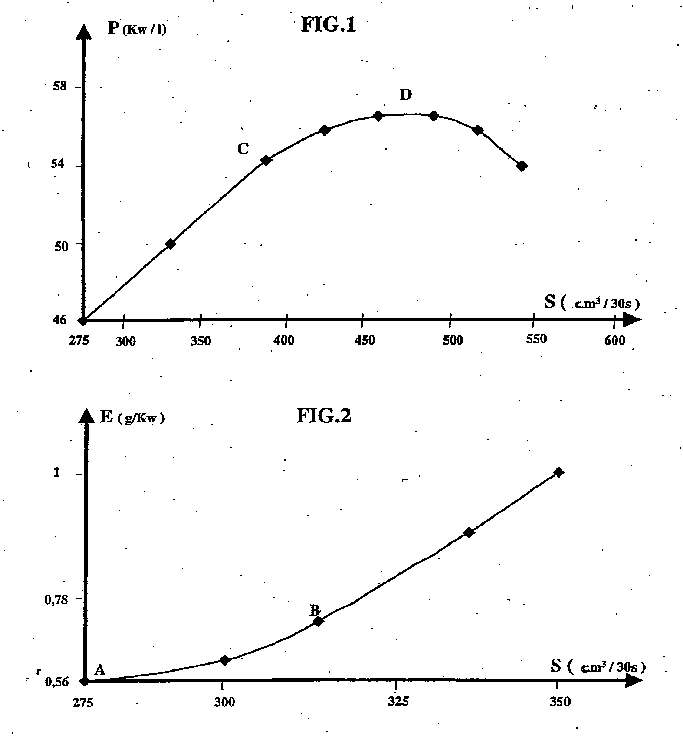

A titre d'illustration, la figure 1 montre l'évolution de la puissance (P) du moteur, en ordonné, (en KW/l) en fonction de la sensibilité d'injection (S) de ce moteur (en cm$^3$/30 s), en abscisse.

Il peut être constaté que, jusqu'au point C, la puissance du moteur augmente sensiblement linéairement avec l'augmentation de la sensibilité d'injection, puis, à partir de ce point C jusqu'au point D, l'augmentation de puissance du moteur est minime alors que la sensibilité d'injection augmente de manière importante, et, à partir de ce point D, la sensibilité est augmentée alors que la puissance du moteur décroît.

Aux charges partielles, comme cela a été maintes fois prouvées, une augmentation de la sensibilité d'injection entraîne une augmentation des émissions de polluants (NOx, particules et CO).

En ce qui concerne les polluants, et toujours à titre d'exemple, la figure 2 montre, en ordonné, l'évolution des émissions de polluants (E) en g/Kwh (NOx/10 ou Particules) en fonction de la sensibilité d'injection (S), en abscisse, sur un point de fonctionnement représentatif d'un fonctionnement du moteur en ville.

Il peut être constaté que, pour une sensibilité d'injection augmentant d'environ 40 cm$^3$/30 s allant du point A au point B, on obtient une augmentation des émissions de polluants de l'ordre de 0,15 g/KW, puis, au-delà de ce point B, les émissions de polluants croissent de manière très significative.

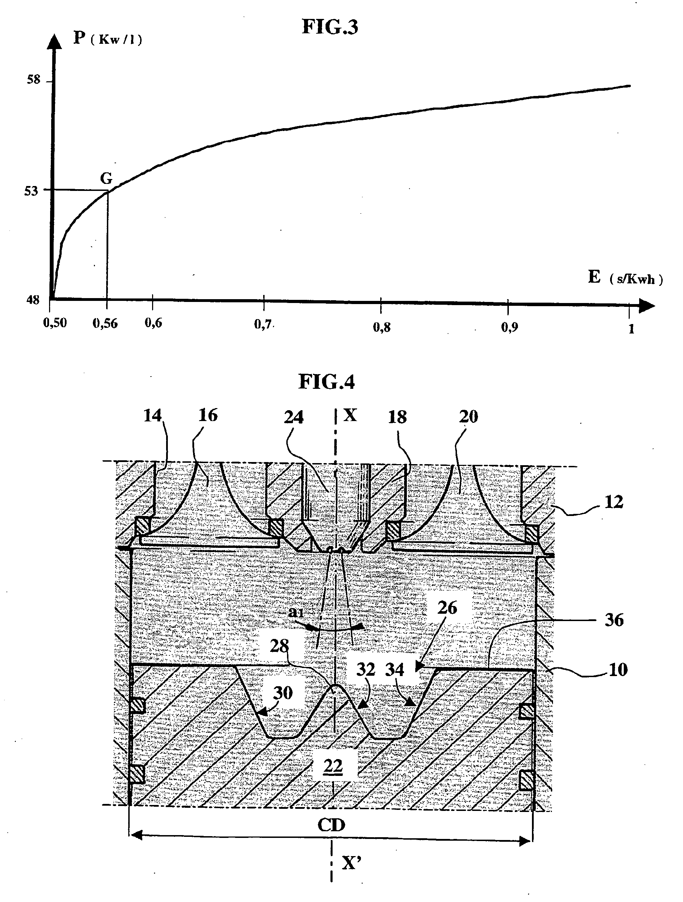

Sur la figure 3, il est montré l'évolution de la sensibilité d'injection sur un graphique portant, en abscisse, les émissions de polluants (E) aux charges partielles (NOx/10 ou particules) et, en ordonné, la puissance (P) du moteur. Il peut être constaté que, pour respecter la réglementation en matière de pollution, la sensibilité d'injection doit rester inférieure à 380 cm$^3$/30s, correspondant au point G sur ce graphique.

Pour s'affranchir des inconvénients mentionnés ci-dessus et notamment du compromis entre réglementation anti-pollution et performance moteur (puissance et couple), le demandeur a mis au point un procédé d'injection de carburant qui permet d'obtenir une sensible augmentation de la puissance du moteur tout en diminuant de manière significative les émissions de polluants.

Il s'agit d'un moteur avec deux modes de combustion. Un mode de combustion traditionnelle de type Diesel, avec l'injection du carburant autour du point mort haut combustion et combustion par diffusion, qui est préférentiellement utilisé aux charges élevées.

Par changement de la stratégie d'injection, le moteur fonctionne selon un autre mode de combustion, dit mode homogène, qui est utilisé aux faibles charges.

Ainsi, l'invention concerne un procédé d'injection de carburant dans la chambre de combustion d'un moteur à combustion interne à injection directe, ladite chambre étant délimitée par la paroi d'un cylindre, une culasse et un piston comportant un bol logeant un téton, **caractérisé en ce qu'**on injecte le carburant par l'intermédiaire d'un injecteur permettant d'obtenir une sensibilité d'injection du moteur supérieure ou égale à 380 cm$^3$/30s, ladite sensibilité corres-

pondant à $Perméabilité \times \dfrac{50}{Puissance} \times \dfrac{\sqrt{P\_inj - 50}}{1300} \times \dfrac{0,5}{L\_cyl}$ où perméabilité correspond à la perméabilité de l'injecteur, Puissance à la puissance au litre du moteur, P_inj à la pression maximale du système d'injection et L_cyl à la cylindrée du moteur, et ayant un angle de nappe inférieur ou égal à $2\,\mathrm{Arctg}\dfrac{CD}{2F}$ où CD est le diamètre du cylindre et F est la distance entre le point d'origine des jets de carburant et la position du piston correspondant à un angle de vilebrequin de 50° par rapport au point mort haut (PMH).

De manière avantageuse, la sensibilité peut être comprise entre 380 et 520 $cm^3$/30s.

On peut injecter le carburant avec un angle de nappe de jets de carburant inférieur ou égal à 120°.

On peut injecter le carburant avec un angle de nappe compris entre 40° et 100°.

L'invention concerne également un moteur à combustion interne comprenant au moins un cylindre, une culasse, un piston coulissant dans ce cylindre, un injecteur de carburant et une chambre de combustion délimitée sur un côté par la face supérieure du piston comprenant un téton pointant vers la culasse et disposé dans un bol, **caractérisé en ce que** ce moteur comporte un injecteur de carburant permettant d'obtenir une sensibilité d'injection supérieure ou égale

à 380 $cm^3$/30s, ladite sensibilité correspondant à $Perméabilité \times \dfrac{50}{Puissance} \times \dfrac{\sqrt{P\_inj - 50}}{1300} \times \dfrac{0,5}{L\_cyl}$ où perméabilité correspond la perméabilité de l'injecteur, Puissance à la puissance au litre du moteur, P_inj à la pression maximale du système d'injection et L_cyl à la cylindrée du moteur, et ayant un angle de nappe inférieur ou égal à

$2\,Arctg\dfrac{CD}{2F}$ où CD est le diamètre du cylindre et F la distance entre le point d'origine des jets de carburant issus de l'injecteur et la position du piston correspondant à un angle de vilebrequin de 50° par rapport au point mort haut (PMH).

L'angle de nappe de l'injecteur peut être choisi entre 0° et 120°, préférentiellement entre 40° et 100°.

L'angle au sommet du téton peut être choisi supérieur à l'angle de nappe d'une valeur comprise entre 0° et 30°.

Les axes des jets de carburant peuvent former avec le flanc du téton un angle d'intersection de l'ordre de 5°.

Le bol peut comprendre une paroi latérale inclinée et l'angle d'inclinaison de cette paroi est inférieur à 45°.

Les autres caractéristiques et avantages de l'invention apparaîtront à la lecture de la description qui va suivre, donnée uniquement à titre illustratif, et à laquelle sont annexées:

- la figure 4 qui montre une coupe axiale partielle d'un moteur à combustion interne à injection directe utilisant le procédé selon l'invention ;
- la figure 5 qui est un graphique représentant l'évolution des émissions de polluants en fonction de la sensibilité d'injection, selon le procédé de l'invention et
- la figure 6 qui est un autre graphique montrant l'évolution, selon l'invention, de la sensibilité d'injection en fonction des émissions de polluants et de la puissance du moteur.

On se reporte maintenant à la figure 4 qui montre un moteur à combustion interne, notamment de type Diesel. Ce moteur comprend au moins un cylindre 10 d'axe XX' et de diamètre CD, une culasse 12, au moins une tubulure d'admission 14 d'au moins un fluide gazeux, tel que de l'air ou un mélange d'air et de gaz d'échappement recirculés (EGR), commandée en ouverture, ou en fermeture, par un moyen d'obturation, tel qu'une soupape d'admission 16, au moins une tubulure d'échappement 18 des gaz brûlés, également commandée en ouverture, ou en fermeture, par un moyen d'obturation, tel qu'une soupape d'échappement 20, un piston 22 coulissant dans le cylindre 10 et un injecteur de carburant 24, de préférence multi jets, pulvérisant du carburant à l'intérieur de la chambre de combustion du moteur.

La chambre de combustion est donc délimitée par la face interne de la culasse 12, la paroi circulaire du cylindre 10 et la face supérieure du piston 22.

Cette face supérieure du piston comporte un bol concave 26 à l'intérieur duquel est disposé un téton 28 qui s'élève vers la culasse 12 en se situant au centre de ce bol.

Le téton 28, de forme générale tronconique, comporte un sommet, de préférence arrondi, se poursuivant, en direction du fond 30 du bol, par un flanc incliné 32 sensiblement rectiligne, puis, à partir de ce fond, par une paroi latérale inclinée 34, sensiblement rectiligne, rejoignant une surface sensiblement horizontale 36 de la face supérieure du piston.

L'injecteur de carburant est de type à faible angle de nappe $a_1$ et est choisi pour que la paroi du cylindre 10 ne soit jamais mouillée par le carburant pour toute position du piston comprise entre + 50° et +$\alpha$ ou entre -50° et -$\alpha$, où $\alpha$ représente l'angle du vilebrequin pour la phase d'injection choisie par rapport au point mort haut (PMH), cet angle $\alpha$ étant supérieur à 50° et inférieur ou égal à 180° pour obtenir une combustion de type homogène.

Si CD désigne le diamètre (en mm) du cylindre 10 et F la distance (en mm) entre le point d'origine des jets de carburants et la position du piston correspondant à un angle de vilebrequin de 50°, alors l'angle de nappe a, (en degré) sera inférieur ou égal à $2 Arctg \dfrac{CD}{2F}$ .

Par angle de nappe, il est entendu l'angle au sommet que forme le cône issu de l'injecteur 24 et dont la paroi périphérique fictive passe par tous les axes des jets de carburant.

Une fourchette angulaire typique pour l'angle de nappe $a_1$ est au plus de 120° et préférentiellement entre 40° et 100°.

Avantageusement, l'angle au sommet du téton est choisi d'une façon telle qu'il soit supérieur à l'angle de nappe $a_1$ des jets de carburant d'une valeur comprise entre 0° et 30° et l'angle d'inclinaison de la paroi latérale 34 du bol 26 est inférieur à 45°.

Préférentiellement, il est prévu que les axes des jets de carburant forment avec le flanc 32 du téton 28 un angle d'intersection de l'ordre de 5°.

L'angle au sommet du téton 28 et l'angle d'inclinaison de la paroi latérale 34 du bol 26 sont adaptés sensiblement à l'angle de nappe a, de jets de carburant, de façon à ce que le carburant soit injecté sensiblement le long du flanc 32 du téton puis remonte le long de la paroi latérale 34.

Dans l'exemple représenté l'axe général du bol 26, l'axe de l'injecteur 24 et l'axe du téton 28 sont confondus avec l'axe XX' du cylindre mais, bien entendu, il peut être prévu que les axes du bol, de l'injecteur et du téton ne soient pas coaxiaux avec celui du cylindre mais l'essentiel réside dans la disposition selon laquelle l'axe général de la nappe de jets de carburant issus de l'injecteur 24, l'axe du téton 28 et l'axe du bol 26 soient coaxiaux.

Pour réaliser la combustion, le carburant est injecté dans la chambre de combustion avec un injecteur comportant un angle de nappe faible, tel que défini précédemment, et l'injecteur est conformé pour que la sensibilité d'injection du moteur soit supérieure ou égale à 380 $cm^3$/30s.

Le procédé d'injection alliant une forte sensibilité d'injection et un faible angle de nappe permet d'augmenter la puissance du moteur et de diminuer les émissions de polluants aux charges partielles.

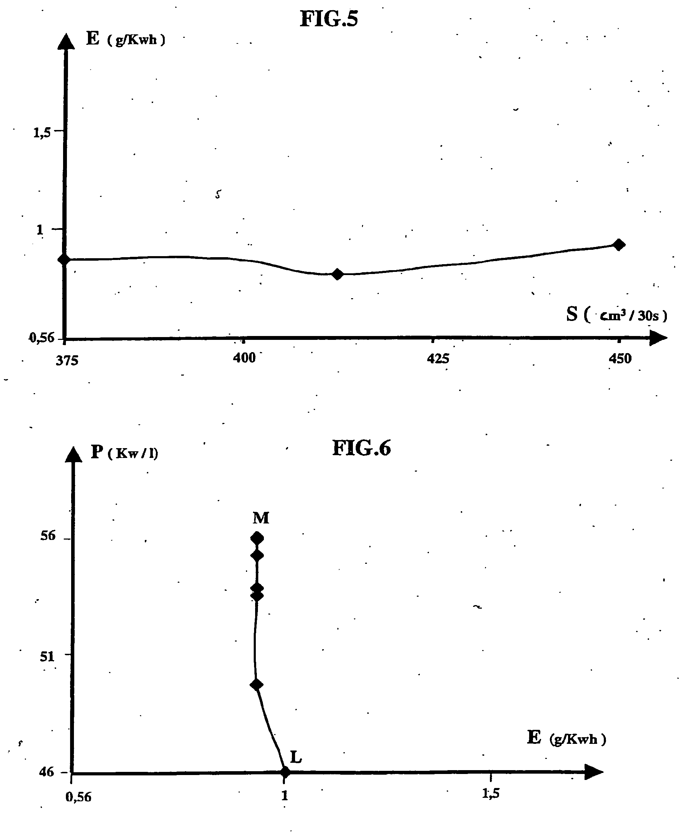

Grâce à l'utilisation du procédé de combustion et comme on peut le remarquer sur la figure 5 qui montre, en ordonné, l'évolution des émissions de polluants (E) (NOx/10 ou particules) en fonction de la sensibilité d'injection (S), en abscisse, il peut être constaté que l'augmentation de la sensibilité d'injection au-delà d'une valeur de 380 $cm^3$/30s n'accroît pas de manière significative les émissions de polluants.

Il est donc possible de choisir une valeur de la sensibilité d'injection en fonction des seules exigences de pleine charge c'est-à-dire bien au-delà de la valeur de 380 $cm^3$/30s.

De même, comme on peut le voir sur la figure 6 qui montre une courbe représentant l'évolution de la sensibilité d'injection sur un graphique portant, en abscisse, les émissions de polluants (E) aux charges partielles (NOx/10 ou particules) et, en ordonné, la puissance (P) du moteur, il peut être constaté que, pour une sensibilité d'injection du moteur augmentant de 380 $cm^3$/30 s à 520 $cm^3$/30 s allant du point L au point M, on obtient une augmentation de puissance du moteur de l'ordre de 10 KW/l sans augmentation significative des émissions de polluants.

**Revendications**

1. Procédé d'injection de carburant dans la chambre de combustion d'un moteur à combustion interne à injection directe, ladite chambre étant délimitée par la paroi d'un cylindre (10), une culasse (12) et un piston (22) comportant un bol (26) logeant un téton (28), **caractérisé en ce qu'**on injecte le carburant par l'intermédiaire d'un injecteur (24) permettant d'obtenir une sensibilité d'injection du moteur supérieure ou égale à 380 $cm^3$/30s, ladite sensibilité correspondant à $Perméabilité \times \dfrac{50}{Puissance} \times \dfrac{\sqrt{P\_inj - 50}}{1300} \times \dfrac{0,5}{L\_cyl}$ où Perméabilité correspond à la perméabilité de l'injecteur en $cm^3$/30s, Puissance à la puissance au litre du moteur en KW/l, P_inj à la pression maximale du système d'injection en bar L_cyl à la cylindrée du moteur en litre, et ayant un angle de nappe ($a_1$) inférieur ou égal à $2 Arctg \dfrac{CD}{2F}$ où CD est le diamètre du cylindre (10) et F est la distance entre le point d'origine des jets de carburant et la position du piston correspondant à un angle de vilebrequin de 50° par rapport au point mort haut (PMH).

2. Procédé selon la revendication 1, **caractérisé en ce que** la sensibilité est comprise entre 380 et 520 $cm^3$/30s.

3. Procédé selon la revendication 1, **caractérisé en ce que** l'on injecte le carburant avec un angle de nappe ($a_1$) de jets de carburant inférieur ou égal à 120°.

4. Procédé selon la revendication 3, **caractérisé en ce que** l'on injecte le carburant avec un angle de nappe ($a_1$) compris entre 40° et 100°.

5. Moteur à combustion interne comprenant au moins un cylindre (10), une culasse (12), un piston (22) coulissant dans ce cylindre, un injecteur (24) de carburant et une chambre de combustion délimitée sur un côté par la face supérieure du piston (22) comprenant un téton (28) pointant vers la culasse (12) et disposé dans un bol (26), **caractérisé en ce que** ce moteur comporte un injecteur de carburant (24) permettant d'obtenir une sensibilité d'injection supérieure ou égale à 380 cm$^3$/30s, ladite sensibilité correspondant à

$$Perméabilité \times \frac{50}{Puissance} \times \frac{\sqrt{P\_inj - 50}}{1300} \times \frac{0,5}{L\_cyl}$$ où Perméabilité correspond à la perméabilité de

l'injecteur en cm$^3$/30s, Puissance à la puissance au litre du moteur en Kw/l, P_inj à la pression maximale du système d'injection en bar et L_cyl à la cylindrée du moteur en litre, et ayant un angle de nappe ($a_1$) inférieur ou égal à

$$2Arctg\frac{CD}{2F}$$ où CD est le diamètre du cylindre (10) et F la distance entre le point d'origine des jets de carburant issus de l'injecteur (24) et la position du piston correspondant à un angle de vilebrequin de 50° par rapport au point mort haut (PMH).

6. Moteur selon la revendication 5, **caractérisé en ce que** l'angle de nappe ($a_1$) de l'injecteur (24) est choisi entre 0° et 120°.

7. Moteur selon la revendication 6, **caractérisé en ce que** l'angle de nappe ($a_1$) de l'injecteur (24) est choisi entre 40° et 100°.

8. Moteur selon l'une des revendications 5 à 7, **caractérisé en ce que** l'angle au sommet du téton (28) est choisi supérieur à l'angle de nappe ($a_1$) d'une valeur comprise entre 0° et 30°.

9. Moteur selon l'une des revendications 5 à 8, **caractérisé en ce que** les axes des jets de carburant forment avec le flanc (32) du téton (28) un angle d'intersection de l'ordre de 5°.

10. Moteur selon la revendication 5 dans lequel le bol (26) comprend une paroi latérale inclinée (34), **caractérisé en ce que** l'angle d'inclinaison de la paroi (38) est inférieur à 45°.

**Claims**

1. A method for injecting fuel into the combustion chamber of a direct-injection internal combustion engine, said chamber being delimited by the wall of a cylinder (10), a cylinder head (12) and a piston (22) comprising a bowl (26) that houses a nipple (28), **characterised in that** the fuel is injected via an injector (24) making it possible to obtain an engine injection sensitivity greater than or equal to 380cm$^3$/30s, said sensitivity corresponding to

$$Permeability \; x \; \frac{50}{Power} \; x \; \frac{\sqrt{P\_inj - 50}}{1300} \; x \; \frac{0.5}{L\_cyl}$$ where Permeability corresponds to the permeability of the injector

in cm$^3$/30s, Power to the engine output per litre in KW/l, P_inj to the maximum pressure of the injection system in bar and L_cyl to the cubic capacity of the engine in litres, and having an angle of spread ($a_1$) less than or equal to

$$2Arctg\frac{CD}{2F}$$ where CD is the diameter of the cylinder (10) and F is the distance between the point of origin of the fuel jets and the position of the piston corresponding to a crankshaft angle of 50° in relation to the top dead center (TDC).

2. The method according to Claim 1, **characterised in that** the sensitivity is between 380 and 520cm$^3$/30s.

3. The method according to Claim 1, **characterised in that** the fuel is injected with a fuel jet angle of spread ($a_1$) less than or equal to 120°.

4. The method according to Claim 3, **characterised in that** the fuel is injected with an angle of spread ($a_1$) ranging between 40° and 100°.

5. An internal combustion engine including at least one cylinder (10), a cylinder head (12), a piston (22) sliding in this cylinder, a fuel injector (24) and a combustion chamber delimited on one side by the upper face of the piston (22) comprising a nipple (28) pointing towards the cylinder head (12) and arranged in a bowl (26), **characterised in that** this engine comprises a fuel injector (24) making it possible to obtain an injection sensitivity greater than or equal

   to 380cm$^3$/30s, said sensitivity corresponding to $Permeability \; x \dfrac{50}{Power} \; x \dfrac{\sqrt{P\_inj - 50}}{1300} \; x \dfrac{0.5}{L\_cyl}$ where Permeability corresponds to the permeability of the injector in cm$^3$/30s, Power to the engine output per litre in KW/l, P_inj to the maximum pressure of the injection system in bar and L_cyl to the cubic capacity of the engine in litres, and having an angle of spread ($a_1$) less than or equal to $2 Arctg \dfrac{CD}{2F}$ where CD is the diameter of the cylinder (10) and F is the distance between the point of origin of the fuel jets coming from the injector (24) and the position of the piston corresponding to a crankshaft angle of 50° in relation to the top dead center (TDC).

6. The engine according to Claim 5, **characterised in that** the angle of spread ($a_1$) of the injector (24) is selected between 0° and 120°.

7. The engine according to claim 6, **characterised in that** the angle of spread ($a_1$) of the injector (24) is selected between 40° and 100°.

8. The engine according to one of claims 5 to 7, **characterised in that** the angle at the vertex of the nipple (28) is selected greater than the angle of spread ($a_1$) by a value between 0° and 30°.

9. The engine according to one of claims 5 to 8, **characterised in that** the axes of the fuel jets form an angle of intersection in the order of 5° with the flank (32) of the nipple (28).

10. The engine according to claim 5 wherein the bowl (26) includes an inclined lateral wall (34), **characterised in that** the angle of inclination of the wall (38) is less than 45°.

**Patentansprüche**

1. Verfahren zum Einspritzen von Kraftstoff in die Verbrennungskammer eines Verbrennungsmotors mit Direkteinspritzung, wobei die Kammer durch die Wand eines Zylinders (10), einen Zylinderkopf (12) und einen Kolben (22) begrenzt ist, umfassend eine Wanne (26), in der sich ein Zapfen (28) befindet, **dadurch gekennzeichnet, dass** der Kraftstoff mittels einer Einspritzdüse (24) eingespritzt wird, die es ermöglicht, eine Einspritzsensibilität des Motors größer oder gleich 380 cm$^3$/30 s zu erhalten, wobei die Sensibilität

   $Permeabilität \; x \dfrac{50}{Leistung} \; x \dfrac{\sqrt{P\_inj - 50}}{1300} \; x \dfrac{0,5}{L\_cyl}$ entspricht, worin Permeabilität der Permeabilität

   der Einspritzdüse in cm$^3$/30 s, Leistung der Leistung pro Liter des Motors in kW/l, P_inj dem Maximaldruck des Einspritzsystems in Bar und L_cyl dem Hubraum des Motors in Litern entspricht, und die einen Kegelwinkel ($a_1$)

   kleiner oder gleich $2 Arctg \dfrac{CD}{2F}$ hat, worin CD der Durchmesser des Zylinders (10) ist und F der Abstand zwischen dem Ausgangspunkt der Kraftstoffstrahlen ist und die Position des Kolbens einem Kurbelwinkel von 50°, bezogen auf den oberen Totpunkt (OT) entspricht.

2. Verfahren nach Anspruch 1, **dadurch gekennzeichnet, dass** die Sensibilität im Bereich zwischen 380 und 520 cm$^3$/30 s liegt.

**3.** Verfahren nach Anspruch 1, **dadurch gekennzeichnet, dass** der Kraftstoff mit einem Kegelwinkel ($a_1$) der Kraftstoffstrahlen kleiner oder gleich 120° eingespritzt wird.

**4.** Verfahren nach Anspruch 3, **dadurch gekennzeichnet, dass** der Kraftstoff mit einem Kegelwinkel ($a_1$) im Bereich zwischen 40° und 100° eingespritzt wird.

**5.** Verbrennungsmotor, umfassend mindestens einen Zylinder (10), einen Zylinderkopf (12), einen Kolben (22), der in diesem Zylinder beweglich angebracht ist, eine Kraftstoffeinspritzdüse (24) und eine Verbrennungskammer, die an einer Seite durch die obere Seite des Kolbens (22) begrenzt ist, umfassend einen Zapfen (28), der in Richtung Zylinderkopf (12) zeigt und in einer Wanne (26) angeordnet ist, **dadurch gekennzeichnet, dass** dieser Motor eine Kraftstoffeinspritzdüse (24) umfasst, die es ermöglicht, eine Einspritzsensibilität größer oder gleich 380 cm³/30 s zu erhalten, wobei die Sensibilität $\text{Permeabilität } x \dfrac{50}{Leistung} x \dfrac{\sqrt{P\_inj - 50}}{1300} x \dfrac{0,5}{L\_cyl}$ entspricht, worin Permeabilität der Permeabilität der Einspritzdüse in cm³/30 s, Leistung der Leistung pro Liter des Motors in KW/l, P_inj dem Maximaldruck des Einspritzsystems in Bar und L_cyl dem Hubraum des Motors in Litern entspricht, und die einen Kegelwinkel ($a_1$) kleiner oder gleich $2\,\text{Arctg}\,\dfrac{CD}{2F}$ hat, worin CD der Durchmesser des Zylinders (10) ist und F der Abstand zwischen dem Ausgangspunkt der Kraftstoffstrahlen ist, die aus der Einspritzdüse (24) kommen, und wobei die Position des Kolbens einem Kurbelwinkel von 50° bezogen auf den oberen Totpunkt (OT) entspricht.

**6.** Motor nach Anspruch 5, **dadurch gekennzeichnet, dass** der Kegelwinkel ($a_1$) der Einspritzdüse (24) zwischen 0° und 120° ausgewählt ist.

**7.** Motor nach Anspruch 6, **dadurch gekennzeichnet, dass** der Kegelwinkel ($a_1$) der Einspritzdüse (24) zwischen 40° und 100° ausgewählt ist.

**8.** Motor nach einem der Ansprüche 5 bis 7, **dadurch gekennzeichnet, dass** der Winkel an der Spitze des Zapfens (28) so ausgewählt ist, dass er um einen Wert im Bereich zwischen 0° und 30° größer als der Kegelwinkel ($a_1$) ist.

**9.** Motor nach einem der Ansprüche 5 bis 8, **dadurch gekennzeichnet, dass** die Achsen der Kraftstoffstrahlen mit der Seite (32) des Zapfens (28) einen Schnittwinkel in der Größenordnung von 5° bilden.

**10.** Motor nach Anspruch 5, wobei die Wanne (26) eine geneigte Seitenwand (34) umfasst, **dadurch gekennzeichnet, dass** der Neigungswinkel der Wand (38) kleiner als 45° ist.

## FIG.1

## FIG.2

## FIG.3

## FIG.4

## FIG.5

**E** ( g/Kwh )

1,5

1

0,56

375        400        425        450

**S** ( cm³ / 30s )

## FIG.6

**P** ( Kw / l)

56 —        M

51 —

46 —        L

0,56        1        1,5

**E** (g/Kwh )

**EP 1 348 847 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5906183 A